# EUROPÄISCHE PATENTSCHRIFT

(11) **EP 3 023 360 B1**
(45) Veröffentlichungstag und Bekanntmachung des Hinweises auf die Patenterteilung: **10.01.2018**
(21) Anmeldenummer: 15197280.9
(22) Anmeldetag: 20.09.2011
(51) Int. Cl.: B65D 85/804, B65B 29/02

(54) **PORTIONSKAPSEL UND VERWENDUNG EINER PORTIONSKAPSEL**
CAPSULE AND USE OF A CAPSULE
CAPSULE ET UTILISATION D'UNE CAPSULE

(30) Priorität: 22.09.2010 DE 202010013500 U; 07.02.2011 DE 102011010589; 02.03.2011 DE 102011012881; 09.03.2011 US 201113044217
(43) Veröffentlichungstag der Anmeldung: 25.05.2016
(62) Teilanmeldung aus: 14178389.4
(73) Patentinhaber: K-fee System GmbH, 51469 Bergisch Gladbach (DE)
(72) Erfinder: MAHLICH, Gotthard, 61476 Kronberg (DE)
(74) Vertreter: Wolff, Felix

(56) Entgegenhaltungen:
- EP-A1- 0 468 079
- EP-A1- 1 710 173
- EP-A1- 1 792 850
- EP-A2- 1 997 841
- WO-A1-03/073896

## Beschreibung

### Stand der Technik

Die vorliegende Erfindung betrifft eine Portionskapsel zur Herstellung eines Getränks, aufweisend einen Kapselkörper mit einem Kapselboden und einer Einfüllseite, wobei zwischen dem Kapselboden und der Einfüllseite ein Hohlraum zur Aufnahme eines pulverförmigen oder flüssigen Getränkesubstrats ausgebildet ist und wobei zwischen dem Getränkesubstrat und dem Kapselboden ein Filterelement angeordnet ist.
Solche Portionskapseln sind aus dem Stand der Technik allgemein bekannt. Beispielsweise sind in den Druckschiften EP 1792850 B1, EP 1344722 A1, GB 938617 und US 2003/0172813 A1 gattungsgemäße Portionskapseln zur Kaffee- und Espressozubereitung offenbart.
Derartige Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Deckelfolie aufgesiegelt oder aufgeklebt wird, einen geschlossenen Kapselboden, wobei zwischen dem Getränkesubstrat und dem Kapselboden ein sich gegen den Kapselboden abstützendes Partikelsieb angeordnet ist. Diese Siebe sind entweder aus einem thermoplastischen Kunststoff gespritzt oder aus einer Kunstofffolie tiefgezogen oder geprägt.
Für die Zubereitung eines Kaffeegetränkes wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Öffnungsdornes geöffnet und nach dem Abdichten der Brühkammer wird die mit einer Verschlussfolie verschlossene Einfüllseite der Portionskapsel mittels Einstechmitteln angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffepulver. Dieser Druck wirkt ferner auch auf das zwischen dem Kaffeepulver und dem Kapselboden und vor dem eingestochenen Kapselauslauf liegende Partikelsieb ein.

Nachteilig an den im Kunststoffspritzverfahren oder im Tiefzieh- oder Prägeverfahren hergestellten Sieben ist jedoch, dass für die Rückhaltung der Kaffeepartikel die Öffnung der Sieblöcher kleiner als die kleinsten Kaffeepartikel sein müssen. Da im Kaffeemahlverfahren zwangsläufig auch ein gewisser Staubanteil anfällt, ergibt sich bei zu großen Sieblöchern ein Kaffeepartikeldurchgang oder bei zu kleinen Sieblöchern, insbesondere bei hohen Drücken, ein Verstopfen der Siebe. Ferner sind unter den Sieben entsprechende, gegen den Kapselboden wirkende Abstützelemente erforderlich, um die Brühwasserdrücke von bis zu 20 bar aufzunehmen und eine Verformung der Siebe in Folge des hohen Brühwasserdrucks (zusammen mit einer hohen Brühwassertemperatur) zu verhindern. In nachteiliger Weise, erfordern diese Abstützelement insbesondere bei im Spritzgussverfahren hergestellten Siebanordnungen einen zusätzlichen Materialeinsatz, wodurch die Herstellungskosten steigen.

Im Stand der Technik sind deshalb Portionskapseln mit Siebanordnungen bekannt, die diese Nachteile vermeiden sollen. In der US 2778739, der EP 1710173 A1 und der US 5352765 sind Portionskapseln mit Siebanordnungen offenbart, die aus einem Siebträger mit relativ großen Durchgangsöffnungen bestehen, wobei diese Öffnungen mit einem Filtermaterial abgedeckt sind. Nachteil dieser Anordnungen ist, dass zur Darstellung derartiger Siebanordnungen Zusatzkosten für Material und die Fertigung entstehen, da sie aus einem stabilen Siebträger und dem auf dem Siebträger angeordneten Filtermaterial bestehen.
Sowohl bei Sieben mit Sieblöchern als auch bei Siebanordnungen mit einem zusätzlichen Filtermaterial muss sichergestellt werden, dass das durch die Siebanordnung tretende fertige Getränk zu einer Kapselausflussöffnung fließen kann, d.h. zwischen dem Kapselboden und der Siebanordnung muss ein Freiraum für den Getränkeablauf vorgesehen werden. Außerdem beanspruchen derartige Siebanordnungen einen eigenen Raumanteil in der Portionskapsel, was zu einer Vergrößerung des Kapselvolumens und damit zwangsläufig ebenfalls zu einem zusätzlichen Materialeinsatz führt.
Es war deshalb die Aufgabe der vorliegenden Erfindung, eine Portionskapsel mit einer Filteranordnung zur Verfügung zu stellen, welche im Vergleich zum Stand der Technik kostengünstiger zu fertigen ist und bei welcher gleichzeitig die im Zusammenhang mit dem Stand der Technik aufgezeigten Nachteile vermieden werden.

Gelöst wird diese Aufgabe mit einer Portionskapsel gemäß Anspruch 1. Der Oberbegriff des Anspruchs 1 ist aus GB 938617 bekannt.

Im Vergleich zum Stand der Technik hat die erfindungsgemäße Portionskapsel den Vorteil, dass ein einfaches und kostengünstiges Filtervlies als Filtersieb Verwendung findet. Ein aufwändiger Kunststoffspritzvorgang oder ein Tiefzieh- bzw. Prägeverfahren zur Herstellung der Siebe ist somit einsparbar. Die Herstellungskosten werden somit erheblich gesenkt. Zudem wird keine Stützstruktur benötigt, da sich das Vlies unmittelbar am Kapselboden abstützt. Im Vergleich zu den aus dem Stand der Technik bekannten Kunststofffiltern hat ein Filtervlies zudem den Vorteil, dass es eine deutlich größere Flüssigkeitseintrittsoberfläche aufweist. Ferner wird ein Flüssigkeitsquerfluss (parallel zur Haupterstreckungsebene der Filterebene) ermöglicht, wodurch ein besseres Durchmisch- und Abfließverhalten erzielt wird. Darüber hinaus hat sich gezeigt, dass sich bei der Verwendung eines Filtervlieses die Gefahr von Siebverstopfungen deutlich reduziert bzw. nahezu ausgeräumt ist. Überraschenderweise zeigt sich das Filtervlies sowohl bei einer Getränkezubereitung mit einer unter vergleichsweise niedrigen Druck stehenden Zubereitungsflüssigkeit, als auch bei einer Getränkezubereitung mit einer unter vergleichsweise hohen Druck stehenden Zubereitungsflüssigkeit als verstopfungsresistent. Ferner wird zuverlässig stets einen Flüssigkeitsquerfluss im Filtervlies aufrechterhalten und ein Abfluss der in das Filtervlies eintretenden Flüssigkeiten zu einer Abflussöffnung gewährleistet. Trotzdem bildet sich eine sogenannte "Crema", d.h. Schaum, auf dem Getränk, insbesondere dem Espresso, aus. Die Portionskapsel im Sinne der vorliegenden Erfindung umfasst eine vorzugsweise hermetisch dichte Portionskapsel. Dies bedeutet, dass das in der Portionskapsel befindliche Getränke- oder Lebensmittelpulver, beispielsweise Kaffeepulver, Suppenpulver oder Tee, vor dem Extraktionsvorgang im Wesentlichen aromadicht gegenüber der Umwelt verschlossen ist. Die Portionskapsel muss aber nicht hermetisch dicht sein, sondern kann auch, vor deren Verwendung in einer hermetisch dichten Verpackung vorgesehen sein, die dann, beispielsweise manuell geöffnet wird.

Ein Vlies im Sinne der Erfindung ist eine ungeordnete, nicht gewebte Struktur aus Fasern, insbesondere Kunststofffasern. Ein Vlies im Sinne der Erfindung beinhaltet vorzugsweise kein Papier oder Papier-ähnliche Stoffe.

Gemäß einer weiteren Ausführungsform der vorliegenden Erfindung ist vorgesehen, dass das Vlies einen aus Kunststoff-Feinfasern, beispielsweise Polyester-Feinfasern, hergestellten Vliesstoff umfasst, welcher insbesondere ein Wirrfaser-und/oder faserorientierter-Vliesstoff ist. Das Vlies umfasst bevorzugt eine Massenbelegung (auch als Grammatur oder Flächengewicht bezeichnet) zwischen 40 und 100 Gramm pro Quadratmeter, besonders bevorzugt zwischen 60 und 80 Gramm pro Quadratmeter, und ganz besonders bevorzugt, von im Wesentlichen 70 Gramm pro Quadratmeter. Das Filterelement bzw. das Vlies weist bevorzugt eine Dicke zwischen 0,2 und 0,8 Millimetern, besonders bevorzugt zwischen 0,3 und 0,35 Millimetern, und ganz besonders bevorzugt, von im Wesentlichen 0,32 Millimetern auf. Das Vlies ist derart ausgebildet, dass die Luftdurchlässigkeit des Vlieses bei 100 Pascal bevorzugt zwischen 1000 und 3000 l/(m²s), besonders bevorzugt zwischen 1500 und 2500 (l/m²s) und ganz besonders bevorzugt, im Wesentlichen bei 2000 l/(m²s) liegt. Es hat sich in überraschender und nicht vorhersehbarer Weise gezeigt, dass mit derartigen Vliesstoffen optimale Ergebnisse hinsichtlich Extraktionseffizienz, Durchmisch- und Abfließverhalten, sowie Verstopfungsresistenz zu erzielen sind und sich trotzdem die "Crema" bildet. Vorzugsweise wird das Vlies so auf dem Boden der Kapsel angeordnet dass es möglichst großflächig anliegt.

Beim Öffnen der Kapsel durch ein Perforationsmittel ist es vorteilhaft, wenn dieses das Vlies von dem Kapselboden wegbewegt und dabei spannt oder zusätzlich spannt. Dabei kann das Perforationsmittel in das Vlies eindringen und/oder durchdringen. Vorzugsweise ist das Vlies größer bemessen als der Kapselboden, auf dem es aufliegt, so dass das Vlies etwas am Rand hochsteht.

Gemäß einer Ausführungsform einer nicht erfindungsgemäßen Kapsel weist das Filterelement eine Filzstruktur auf. Insbesondere handelt es sich dabei um eine Nadelfilzstruktur. Vorzugsweise besteht das Filterelement aus mindestens einer Filzstruktur und einer Trägerstruktur, insbesondere einer Gewebestruktur, wobei, besonders bevorzugt die Filzstruktur, zumindest einen Teilabschnitt des Volumens, die Trägerstruktur umfasst. Vorzugsweise erstreckt sich die Filzstruktur über der gesamten Querschnitt der Trägerstruktur, besonders bevorzugt aber nur über nur über einen Teilbereich der Höhe. Vorzugsweise ist die Filzstruktur form- kraft und/oder stoffschlüssig mit der Trägerstruktur verbunden. Vorzugsweise weist das Filterelement zwei oder mehr Filzstrukturen auf, die durch die Trägerstruktur vorzugsweise voneinander getrennt sind. Die Dicke der beiden Filzstrukturen kann gleich oder unterschiedlich sein. Vorzugsweise ist eine dem Pulver oder Tee zugewandte Filzstruktur dünner als die dem Kapselboden zugewandte Filzstruktur oder umgekehrt. Vorzugsweise wird die Oberfläche der Filzstruktur behandelt, beispielsweise wärmebehandelt, um beispielsweise lose Fasern zu fixieren. Vorzugsweise wird das eine Filzstruktur aufweisende Filterelement lediglich in die Kapsel, insbesondere auf deren Boden, eingelegt. Das Filterelement kann aber auch mit der Kapsel, insbesondere deren Boden, insbesondere stoffschlüssig, verbunden werden. Beim Perforieren kann das Perforationsmittel in dieses Filterelement eindringen. Vorzugsweise werden mehrere Filterelemente, die eine oder mehrere Filzstrukturen und eine Trägerstruktur aufweisen, in der Kapsel übereinander angeordnet, ggf. miteinander verbunden.

Ein Filterelement mit einer Filzstruktur hat den Vorteil, dass sich keine "Crema" auf einem Kaffee, Espresso oder dergleichen bildet bzw. dass sich auf einem Tee keine Blasen bilden.

Ein eine Trägerstruktur, insbesondere eine Gewebestruktur, und eine Filzstruktur aufweisendes Filterelement wird beispielsweise dadurch hergestellt, dass eine Gewebestruktur bestehend aus Längs- und Querfäden zur Verfügung gestellt wird. Für die Konstruktion eines Filzes, insbesondere eines Nadelfilzes, werden vorzugsweise Fasereinheiten ausgewählt von 0.8 - 7 dtex. Die Verbindung der Einzelfasern miteinander zu einem Filz und/oder dessen Verankerung in der Trägerstruktur findet vorzugsweise durch den Produktionsprozess des Vernadelns statt. Dabei werden Nadeln mit umgekehrten Widerhaken in das vorgelegte Faserpaket mit hoher Geschwindigkeit eingestochen und wieder herausgezogen. Durch die Widerhaken werden die Fasern über eine Vielzahl entstehender Schlaufen miteinander und/oder mit dem Trägergewebe verschlungen.

Das Trägerelement aufweisend eine oder mehrere Filzstrukturen umfasst bevorzugt eine Massenbelegung (auch als Grammatur oder Flächengewicht bezeichnet) zwischen 100 und 800 Gramm pro Quadratmeter, besonders bevorzugt zwischen 200 und 650 Gramm pro Quadratmeter, und ganz besonders bevorzugt, von im Wesentlichen 150 - 250 Gramm pro Quadratmeter für die Herstellung von Tee und 600 - 700 Gramm pro Quadratmeter für die Herstellung von Kaffee, Espresso oder dergleichen. Das Filterelement bzw. das Vlies weist bevorzugt eine Dicke zwischen 0,8 und 3,3 Millimetern, besonders bevorzugt zwischen 1,1 und 3,0 Millimetern, und ganz besonders bevorzugt, 1,2 - 1,4 Millimeter für die Herstellung von Tee und 2,6 - 3,0 für die Herstellung von Kaffee auf.

Gemäß einer Ausführungsform einer nicht erfindungsgemäßen Kapsel ist vorgesehen, dass das Filterelement ein offenporigen Schwamm und/oder einen offenporigen Schaumstoff umfasst, welcher im Bereich des Kapselbodens angeordnet ist. Es hat sich in überraschender und nicht vorhersehbarer Weise gezeigt, dass die oben genannten Vorteile gegenüber dem Stand der Technik, wie beispielsweise die geringeren Herstellungskosten, die Verstopfungsresistenz, der Flüssigkeitsquerfluss, sowie das bessere Durchmisch-und Abfließverhalten in gleicher Weise mit einem als offenporigen Schwamm und/oder einem als offenporigen Schaumstoff ausgebildeten Filterelement zu erzielen sind. Insbesondere weisen das Vlies, der offenporige Schwamm und der offenporige Schaumstoff jeweils eine Mikroporosität auf, welche den Flüssigkeitsquerfluss erlaubt und somit die Verstopfungsresistenz ermöglicht. Der Schwamm umfasst beispielsweise einen retikulierten Polyurethanschaum.

Das Filterelement, d.h. das Vlies wird erfindungsgemäß einfach in den Kapselkörper eingelegt und liegt anschließend locker auf dem Kapselboden, bevor das Getränkesubstrat in den Kapselkörper eingefüllt wird. Der Kapselkörper ist bevorzugt kegelstumpfförmig oder zylindrisch geformt und wird beispielsweise aus Kunststoff, einem Naturstoff und/oder einem biologisch abbaubaren Werkstoff aus einer tiefgezogenen Kunststofffolie oder im Kunststoffspritzverfahren hergestellt. Der Kapselkörper weist vorzugsweise auf der Einfüllseite einen Kragenrand auf, auf den eine Deckelfolie aufgesiegelt oder aufgeklebt ist. Alternativ ist denkbar, dass der Kapselkörper und ein Kapseldeckel mittels eines mechanischen Verfahrens miteinander verbunden sind. Der Boden der Portionskapsel ist vorzugsweise geschlossen und wird vorzugsweise erst in der Brühkammer mittels eines von außen auf den Portionskapselboden wirkenden Perforationsmittels zur Erzeugung einer Auslauföffnung perforiert. Alternativ wäre aber ebenso denkbar, dass der Boden der Portionskapsel bereits werksseitig mit einer Auslauföffnung versehen ist, welche mittels einer Dichtfolie vorzugsweise verschlossen ist. Die Dichtfolie ist dann beispielsweise mittels des Perforationsmittels perforierbar oder von Hand vom Kapselboden abziehbar. Das Filtervlies ist vorzugsweise reißfest ausgebildet. Bei der Dichtfolie handelt es sich vorzugsweise um eine Kunststofffolie, die mindestens eine Barriereschicht, beispielsweise eine Metallschicht, insbesondere eine Aliminium-Schicht aufweist. Die Kunststofffolie weist vorzugsweise auf ihrer der Kapsel zugewandten Seite eine "Peel-Schicht" auf, um die Kunststofffolie vergleichsweise leicht von dem Kapselboden lösen zu können.
Die Auslauföffnung ist vorzugsweise so groß vorgesehen, dass sie ein gegebenenfalls vorhandenes Perforationsmittel berührungsfrei aufnehmen kann. Besonders bevorzugt ist die Auslauföffnung so groß vorgesehen, das an ihr, beim Ausströmen des fertiggestellten Getränkes kein nennenswertes Druckverlust entsteht, insbesondere dass es zu keiner nennenswerten Verwirbelung des fertiggestellten Getränkes kommt, der zu einem Gaseintrag in das Getränk und damit zur Schaumbildung führen könnte.

Gemäß eines weiteren Ausführungsform der vorliegenden Erfindung ist vorgesehen, dass das Filterelement elastisch ausgebildet ist und zumindest in seinem Randbereich im Bereich des Kapselbodens angeordnet und/oder befestigt ist. Wenn der Kapselboden von einem äußeren Perforationsmittel durchstochen wird, kann das Filterelement bei einem Kontakt mit dem Perforationsmittel aufgrund seiner Elastizität derart nachgeben bzw. gedehnt werden, dass eine Perforation des Filterelements verhindert wird. Somit wird die Gefahr ausgeräumt, dass das Filterelement durch das Perforationsmittel perforiert wird und Getränkesubstanz ungefiltert aus der Portionskapsel gespült wird. Eine feste Beabstandung zwischen dem Filterelement und dem Kapselboden, wie sie aus dem Stand der Technik bekannt ist, ist nicht notwendig, da dieser Abstand durch das Perforationsmittel automatisch herbeigeführt wird. Auf diese Weise entsteht unterhalb des Filterelements ferner ein Sammelbecken für die durch das Filterelement hindurchtretende Getränkeflüssigkeit.

Gemäß eines weiteren Ausführungsform der vorliegenden Erfindung ist vorgesehen, dass das Filterelement von dem Perforationsmittel gespannt, angestochen und/oder durchstochen wird.

Gemäß eines weiteren Gegenstands Ausführungsform der vorliegenden Erfindung ist vorgesehen, dass das Filterelement im Hohlraum der Portionskapsel angeordnet ist und auf einer der Einfüllseite zugewandten Seite des Kapselbodens aufliegt. Vorteilhafterweise werden die Herstellungskosten für die Portionskapsel erheblich reduziert, da das Filterelement einfach nur locker in die Portionskapsel eingelegt wird. Eine Fixierung des Filterelements erfolgt vorzugsweise durch die Getränkesubstanz, welche beim Befüllen der Portionskapsel auf dem Filterelement angeordnet wird und somit das Filterelement festklemmt.

Gemäß eines weiteren Ausführungsform der vorliegenden Erfindung ist vorgesehen, dass der Durchmesser des Filterelements größer als der Durchmesser des Kapselbodens ist. In vorteilhafter Weise wird beim Befüllen der Portionskapsel mit Getränkesubstanz das Filterelement an den Bodenbereich angedrückt, wobei der überstehende Randbereich sich zwangsläufig an einen Seitenwandbereich der Portionskapsel anschmiegt und in Richtung der Einfüllseite absteht bzw. in Richtung der Einfüllseite abgeknickt wird. Dies hat den Vorteil, dass, wenn ein Zentralbereich des Filterelements infolge eines mechanischen Kontaktes mit dem von Außen in den Bodenbereich eintretenden Perforationsmittel vom Boden abgehoben wird, der Randbereich in Richtung des Kapselbodens und in Richtung des Zentralbereichs nachrutscht, so dass keine Getränkesubstanz ungefiltert am Rand des Filterelements vorbei das Filterelement in Richtung Ausgangsöffnung umfließt. Dies ermöglicht insbesondere ein Anheben des Filterelements vom Kapselboden auch bei einem nicht-elastischen Filterelement, ohne dass die Filterwirkung beeinträchtigt wird. Bei einem elastischen Filterelement wird das Anheben des Zentralbereichs ohne Beeinträchtigung der Filterwirkung durch den nachrutschenden Randbereich des Filterelements zumindest begünstigt, da auch eine Kombination aus Dehnen und Nachrutschen des Filterelements im Falle der Perforation des Kapselbodens denkbar ist.

Gemäß eines weiteren Ausführungsform der vorliegenden Erfindung ist vorgesehen, dass das Filterelement einen Randbereich aufweist, welcher im Wesentlichen in Richtung der Einfüllseite absteht und/oder in Richtung der Einfüllseite umgebogen ist. Auf diese Weise können ebenfalls die oben beschriebenen Vorteile erzielt werden, wonach der Randbereich in Richtung des Kapselbodens bzw. in Richtung des Zentralbereichs nachrutscht, sobald das Filterelement im Zentralbereich angehoben wird.

Gemäß einer weiteren Ausführungsform der vorliegenden Erfindung ist vorgesehen, dass der Randbereich sich zumindest teilweise entlang eines Seitenwandbereichs des Kapselkörpers erstreckt, wobei sich der Seitenwandbereich zwischen der Einfüllseite und dem Kapselboden erstreckt. In vorteilhafter Weise wird der Randbereich beim Befüllen der Portionskapsel durch die Getränkesubtanz nach Außen gegen den Seitenwandbereich gedrückt, wodurch eine verbesserte Dichtwirkung zwischen dem Seitenwandbereich und dem Filterelement erzielt wird. Insbesondere beim oben beschriebenen Nachrutschen des Filterelements wird hierdurch verhindert, dass Brühwasser das Filterelement ungehindert umfließt.

Gemäß einer weiteren Ausführungsform der vorliegenden Erfindung ist vorgesehen, dass das Filterelement den Kapselboden vollständig oder nur teilweise überdeckt. Insbesondere ist es ausreichend, wenn das Filterelement ausschließlich im Bereich der Perforierung bzw. im Bereich einer Auslassöffnung im Kapselboden angeordnet ist.

Gemäß einer weiteren Ausführungsform der vorliegenden Erfindung ist vorgesehen, dass das Filterelement am Kapselboden befestigt ist, wobei das Filterelement vorzugsweise stoffschlüssig am Kapselboden, insbesondere durch Siegeln befestigt ist. Vorteilhafterweise wird somit ein Verrutschen des Filterelements verhindert. Diese Befestigung erfolgt vorzugsweise durch Ultraschallschweißen.

Gemäß einer weiteren Ausführungsform der vorliegenden Erfindung ist vorgesehen, dass das Filterelement in einem Randbereich des Kapselbodens am Kapselboden befestigt ist und/oder dass das Filterelement in einem Randbereich des Filterelements am Seitenwandbereich befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Gemäß einer weiteren Ausführungsform der vorliegenden Erfindung ist vorgesehen, dass der Kapselboden eine Ausbuchtung in eine der Einfüllseite entgegengesetzte Richtung aufweist. Vorteilhafterweise dient die Ausbuchtung zur Aufnahme des Perforierungsmittels, so dass beim Einstechen des Perforierungsmittels in den Kapselboden der Kapselboden im Bereich der Ausbuchtung zwar perforiert wird, das Perforierungsmittel aber anschließend im Hohlraum der Ausbuchtung verbleibt. Einer Perforierung des Filterelements wird somit vorgebeugt. Insbesondere ist bei dieser Ausführungsform ein Anheben des Filterelements durch das Perforierungsmittel nicht erforderlich. Gleichwohl kann das Filterelement dennoch dazu ausgebildet sein, von dem Perforierungsmittel angehoben zu werden, um eine versehentliche Perforierung in jedem Falle auszuschließen.

Gemäß eines weiteren Ausführungsform der vorliegenden Erfindung ist vorgesehen, dass das Filterelement derart ausgebildet ist, dass bei einer Perforation des Kapselbodens durch ein äußeres Perforationsmittel zumindest teilweise ein Abheben des Filterelements vom Kapselboden erfolgt. Auf diese Weise wird eine Perforierung des Filterelements durch das Perforierungsmittel wirksam verhindert.
Gemäß einer weiteren Ausführungsform der vorliegenden Erfindung ist vorgesehen, dass das Filterelement sich nur in einem Zentralbereich vom Kapselboden abhebt und im Randbereich des Kapselbodens weiter auf dem Kapselboden aufliegt oder am Kapselboden befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Gemäß eines weiteren Ausführungsform der vorliegenden Erfindung ist vorgesehen, dass das Filterelement derart ausgebildet ist, dass bei einer Perforation des Kapselbodens durch ein äußeres Perforationsmittel das Filterelement sich in seinem Zentralbereich vom Kapselboden abhebt und ein in Richtung der Einfüllseite vormals abstehender Randbereich des Filterelements zumindest teilweise in Richtung des Kapselbodens nachrückt. Auf diese Weise können die oben beschriebenen Vorteile erzielt werden, wonach der Randbereich in Richtung des Kapselbodens bzw. in Richtung des Zentralbereichs nachrutscht, sobald das Filtervlies im Zentralbereich durch das Perforationsmittel angehoben wird, so dass keine Getränkesubstanz ungefiltert am Rand des Filterelements vorbei das Filterelement in Richtung Ausgangsöffnung umfließt.

Gemäß eines weiteren Ausführungsform der vorliegenden Erfindung ist vorgesehen, dass das Filterelement einen Materialspeicher aufweist. In vorteilhafter Weise ermöglicht ein Materialspeicher, dass das Filterelement sich in seinem Zentralbereich vom Kapselboden abhebt, obwohl das Filterelement in seinem Randbereich fest (insbesondere stoffschlüssig) mit dem Kapselboden verbunden ist und im Wesentlichen nicht-elastisch ausgebildet ist. Der Materialspeicher umfasst insbesondere einen gewellten oder gefalteten Bereich im Filterelement, welcher sich teilweise glättet, wenn der Zentralbereich vom Kapselboden durch das Perforationsmittel abgehoben wird. Auf diese Weise ist sichergestellt, dass bei einer Perforation des Kapselbodens durch ein äußeres Perforationsmittel das Filterelement sich in seinem Zentralbereich vom Kapselboden abhebt und Material des Filterelements aus dem Materialspeicher in Richtung des Zentralbereichs nachrückt, so dass die sich in Folge des Abhebens vergrößernde Oberfläche des Filterelements durch Material aus dem Materialspeicher kompensiert wird.
Gemäß einer weiteren Ausführungsform der vorliegenden Erfindung ist vorgesehen, dass der Kapselboden eine Sollbruchstelle aufweist, welche dazu vorgesehen ist, infolge eines mechanischen Kontakts mit einem äußeren Perforationsmittel aufzureißen, wobei die Sollbruchstelle vorzugsweise eine Mehrzahl von sternförmig um einen zentralen Punkt des Kapselbodens angeordnete Schwächungslinien umfasst. Der Kapselboden weist entlang der Schwächungslinien vorzugsweise eine reduzierte Materialstärke auf und/oder ist entlang der Schwächungslinien perforiert. In vorteilhafter Weise wird durch die Realisierung der Sollbruchstelle die Perforation des Kapselbodens begünstigt. Dies hat ferner den Vorteil, dass eine weniger scharfe Perforierungsspitze zur Perforierung des Kapselbodens Verwendung finden kann, so dass die Gefahr einer Beschädigung des Filterelements beim Anheben des Filterelements durch die Perforierungsspitze reduziert wird. Insbesondere reicht nun ein stumpfes Perforierungsmittel zur Perforation des Kapselbodens aus.

Gemäß einer weiteren Ausführungsform weist der Kapselboden permanent eine Ausgangsöffnung auf, welche vorzugsweise mit einer Folie abgedichtet ist, wobei die Folie besonders bevorzugt eine Abziehlasche zum Abziehen der Folie von Hand aufweist. Eine Perforation des Kapselbodens mittels eines äußeren Perforationsmittel ist hierbei vorteilhafterweise nicht erforderlich. Vor dem Einlegen der Portionskapsel in die Brühkammer wird die Folie mittels der Abziehlasche einfach vom Kapselboden abgezogen und der Brühvorgang kann gestartet werden. Die Kombination einer vorgefertigten und somit vergleichsweise großen Ausgangsöffnung mit einem Filterelement aus Vlies-, Filz-, insbesondere Nadelfilz, Schaum- oder Schwammmaterial hat den Vorteil, dass die Getränkeflüssigkeit nicht unter hohem Druck aus der Ausgangsöffnung herausfließt und somit die Schaumbildung ("Crema"), insbesondere bei der Herstellung von amerikanischem Kaffee oder Tee, verhindert wird.
Ein weiterer Gegenstand der vorliegenden Erfindung ist ein Verfahren zur Herstellung der erfindungsgemäßen Kapsel, dadurch gekennzeichnet, dass das Filterelement aus einer Warenbahn ausgeschnitten und in die Kapsel eingelegt wird. Vorzugsweise wird das ausgeschnittene Filterelement zumindest eine gewisse Wegstrecke von dem es ausschneidenden Messer, insbesondere Hohlmesser, transportiert. Vorzugsweise wird das ausgeschnittene Filterelement von einer Sonotrode, die fürs Ultraschallschweißen benötigt wird weitertransportiert und/oder an die Kapsel, insbesondere deren Boden, angedrückt.

Ein weiterer Gegenstand der vorliegenden Erfindung ist die Verwendung einer Portionskapsel zur Herstellung eines Getränks, vorzugsweise zur Herstellung eines Kaffee-, Kakao-, Tee- und/oder Milchgetränks.
Die zu einem Gegenstand der vorliegenden Erfindung gemachten Ausführungen gelten für die anderen Gegenstände gleichermaßen und umgekehrt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
- **Figur 1**: zeigt einen Längsschnitt durch eine Portionskapsel gemäß einer ersten Ausführungsform der vorliegenden Erfindung, die für die Zubereitung von Espresso eingerichtet ist.
- **Figur 2**: zeigt einen Längsschnitt durch eine in einer geschlossenen Brühkammer liegende Portionskapsel gemäß der ersten Ausführungsform der vorliegenden Erfindung
- **Figur 3**: zeigt einen Längsschnitt durch eine in einer geschlossenen Brühkammer liegende Portionskapsel gemäß einer zweiten Ausführungsform der vorliegenden Erfindung.
- **Figuren 4a, 4b**: zeigen schematische Schnittbildansichten einer Portionskapsel gemäß einer dritten Ausführungsform der vorliegenden Erfindung.
- **Figuren 5a, 5b**: zeigen schematische Schnittbildansichten einer Portionskapsel gemäß einer vierten Ausführungsform der vorliegenden Erfindung.
- **Figuren 6a, 6b**: zeigen schematische Schnittbildansichten einer Portionskapsel gemäß einer fünften Ausführungsform der vorliegenden Erfindung.
- **Figuren 7a, 7b**: zeigen schematische Schnittbildansichten einer Portionskapsel gemäß einer sechsten Ausführungsform der vorliegenden Erfindung.
- **Figuren 8a, 8b**: zeigen schematische Aufsichten eines Kapselbodens einer Portionskapsel gemäß einer siebten Ausführungsform der vorliegenden Erfindung.
- **Figur 9**: zeigt eine Schnittbildansicht einer Portionskapsel gemäß einer achten Ausführungsform der vorliegenden Erfindung.
- **Figur 10**: zeigt ein Perforationsmittel, das in das Filterelement eindringt.
- **Figur 11**: zeigt ein Perforationsmittel, das das Filterelement durchdringt.
- **Figuren 12a-c**: zeigen unterschiedliche Ausführungsformen des Filterelementes mit Filz, insbesondere Nadelfilz.
In den verschiedenen Figuren sind gleiche Teile stets mit den gleichen Bezugszeichen versehen und werden daher in der Regel auch jeweils nur einmal benannt bzw. erwähnt.

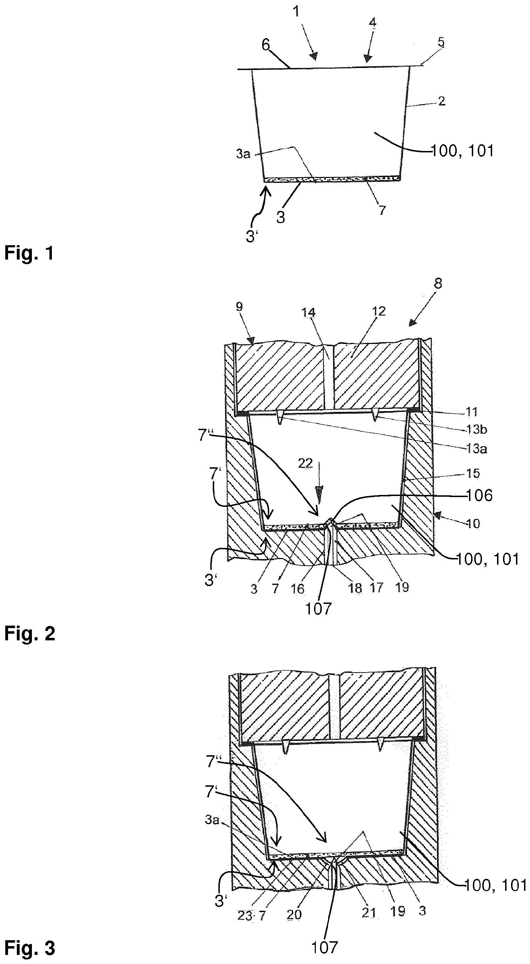

In **Figur 1** ist eine erste Ausführungsform der erfindungsgemäßen Portionskapsel 1 dargestellt. Die Portionskapsel 1 umfasst einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt oder geklebt ist. Zwischen dem Kapselboden 3 und der Deckelfolie 6 ist somit ein, vorzugsweise luft- und aromadicht verschlossener Hohlraum 100, ausgebildet, welcher mit einer pulver- und granulatförmigen Getränkesubstanz 101 gefüllt ist. Die Getränkesubstanz 101 umfasst dabei beispielsweise ein Kaffee-, Kakao-, Tee-und/oder Milchpulver (bzw. -granulat). Auf der Innenseite 3a des geschlossenen Kapselkörperbodens 3, d.h. innerhalb des Hohlraums 100, ist ein Filterelement 7, bestehend aus einem Vliesfilter angeordnet. Das Filterelement 7 liegt lose auf der Innenseite 3a des Kapselbodens 3 auf. Das Vlies umfasst vorzugsweise ein aus Polyester-Feinfasern hergestellten Vliesstoff. Die Fasern werden besonders bevorzugt mittels eines Kalanders thermisch miteinander verbunden, beispielsweise werden eine Vielzahl von extrudierten Polyesterfasern aufeinander und nebeneinander angeordnet und anschließend mittels beheizten Walzen verfestigt (flach kalandriert). Der Vliesstoff umfasst einen Wirrfaser- und/oder faserorientierten-Vliesstoff. Das Vlies umfasst bevorzugt eine Massenbelegung (auch als Grammatur oder Flächengewicht bezeichnet) zwischen 40 und 100 Gramm pro Quadratmeter, besonders bevorzugt zwischen 60 und 80 Gramm pro Quadratmeter und ganz besonders bevorzugt von im Wesentlichen 70 Gramm pro Quadratmeter auf. Das Filterelement bzw. das Vlies weist bevorzugt eine Dicke zwischen 0,20 und 0,8 Millimetern, besonders bevorzugt zwischen 0,25 und 0,39 Millimetern und ganz besonders bevorzugt von im Wesentlichen 0,32 Millimetern auf. Das Vlies ist derart ausgebildet, dass die Luftdurchlässigkeit des Vlieses bei 100 Pascal bevorzugt zwischen 1000 und 3000 l/(m²s), besonders bevorzugt zwischen 1500 und 2500 (l/m²s) und ganz besonders bevorzugt im Wesentlichen bei 2000 l/(m²s) liegt. Das Vlies ist ferner vorzugsweise derart ausgebildet, dass die Höchstzugkraft in Längsrichtung im Wesentlichen 110 Newton pro 5 Zentimeter und in Querrichtung im Wesentlichen 67 Newton pro 5 Zentimeter beträgt, wobei die Höchstzugkraft-Dehnung in Längsrichtung im Wesentlichen 30 Prozent und in Querrichtung im Wesentlichen 38 Prozent umfasst.
In **Figur 2** ist eine Portionskapsel 1 gemäß der in Figur 1 illustrierten ersten Ausführungsform der vorliegenden Erfindung dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Öffnungsdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Ferner wird beim Schließen der Brühkammer 8 der Kapselboden 3 von dem als Öffnungsdorn 16 ausgebildeten Perforationsmittel perforiert, so dass eine Ausgangsöffnung 107 in der Portionskapsel 1 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Öffnungsdorn 16 auf seiner Mantelfläche die Ablaufrillen 17 auf. In der Darstellung ist der Boden 3 der in der Brühkammer 9, 10 befindlichen Portionskapsel 1 von dem Öffnungsdorn 16 des zweiten Brühkammelementes durchstochen, aber das über der Einstichstelle liegende Filterelement 7 ist von der Einstechspitze 19 des Öffnungsdornes 16 leicht angehoben, jedoch nicht durchstochen. Dies wird insbesondere dadurch erreicht, dass der Zentralbereich 7" nicht stoffschlüssig mit dem Kapselboden 3 verbunden ist, sondern das Filterelement 7 lediglich im Randbereich 3' des Kapselbodens 3 stoffschlüssig mit dem Kapselboden 3 verbunden ist, so dass es in Folge des mechanischen Kontaktes mit der Spitze des Öffnungsdorns 16 lediglich vom Kapselboden 3 angehoben wird und somit unperforiert bleibt (d.h. nicht vom Öffnungsdorn 16 perforiert wird). Im Randbereich 3' des Kapselbodens 3 bzw. im Randbereich 7' des Filterelements 7 bleiben der Kapselboden 3 und das Filterelement 7 miteinander in Kontakt und insbesondere stoffschlüssig miteinander verbunden, so dass keine Getränkesubstanz 101 um das Filterelement 7 herum in den Getränkeablauf 18 gelangt. Der Kapselboden 3 weist in seinem zentralen Punkt 106, in welchem der Kapselboden 3 von dem Öffnungsdorn 16 perforiert wird, optional eine Sollbruchstelle 104 auf, so dass ein vergleichsweise stumpfer Öffnungsdorn 16 zur Perforation des Kapselbodens 3 ausreichend ist und so die Gefahr, dass versehentlich auch das Filterelement 7 vom Öffnungsdorn 16 perforiert wird, ausgeräumt wird.

In **Figur 3** ist eine Portionskapsel 1 gemäß einer zweiten Ausführungsform der vorliegenden Erfindung dargestellt, wobei die zweite Ausführungsform im Wesentlichen der in Figur 2 illustrierten ersten Ausführungsform gleicht und die Portionskapsel 1 ebenfalls in einer geschlossenen Brühkammer 8 dargestellt ist. Im Unterschied zur ersten Ausführungsform weist der Portionskapselboden 3 im Einstechbereich des Öffnungsdornes 16 jedoch eine gegen eine Einbuchtung 20 im Brühkammerboden 3a gerichtete Ausbuchtung 21 auf (die Ausbuchtung 21 ist somit in eine der Einfüllseite 4 entgegengesetzte Richtung gerichtet), in die der Öffnungsdorn 16 einsticht, ohne dabei das Filterelement 7 zu durchstechen. Ein Abheben des Filterelements 7 vom Kapselboden 3 ist somit insbesondere nicht erforderlich. Zur Herstellung des Getränkes wird wiederum nach dem Einbringen der Portionskapsel 1 in die Brühkammer 8, die Brühkammer 8 geschlossen. Während des Schließvorganges wird die Deckelfolie 6 der Portionskapsel 1 mittels der Einstechmittel 13a, 13b perforiert und nach erfolgtem Zusammenführen und Abdichten des ersten und des zweiten Brühkammerelementes 9, 10 (mittels der Dichtung 11) wird Brühwasser über den Flüssigkeitseinlass 6 zur Verfügung gestellt. Ebenso sticht während des Schließvorganges der Brühkammer der Öffnungsdorn 16 eine Öffnung in den Boden 3 der Portionskapsel 1. Das über der Einstichstelle liegende Filterelement 7 ist in seiner Dicke und Reißfestigkeit auf die Eindringtiefe der Einstechspitze 19 des Öffnungsdornes 16 abgestimmt, so dass das Filterelement 7 nicht durchstoßen wird. Alternativ liegt das Filterelement 7 über der Ausbuchtung 21 des Kapselbodens 3, die in der Einbuchtung des Brühglockenbodens 23 liegt, und der Öffnungsdorn 16 sticht lediglich in die Ausbuchtung 21 des Kapselbodens 3 und gelangt nicht bis zum Filterelement 7. Sodann strömt die Flüssigkeit, bei der Herstellung von Kaffee beispielsweise heißes Wasser, in die Kapsel 1 ein. In der Kapsel durchströmt diese Flüssigkeit das Getränkesubstrat 101 und extrahiert und/oder löst die für die Getränkeherstellung benötigten Substanzen aus dem Getränkesubstrat 101 aus. Die Strömung der Flüssigkeit in dem Getränkesubstrat 101 ist durch das Bezugszeichen 22 illustriert. Danach strömt das resultierende Getränk durch das zwischen dem Getränkesubstrat 101 und das auf dem Kapselboden 3 angeordnete Filterelement 7, welches verhindert, dass Bestandteile des Getränkesubstrates 101 partikelförmig in das resultierende Getränk gelangen und über die von dem Öffnungsdorn 16 in den Kapselboden 3 gestochene Öffnung und über die Ablaufrillen 17 des Öffnungsdornes 16 weiter in ein Auffanggefäß, beispielsweise eine Tasse oder Kanne, gelangen.

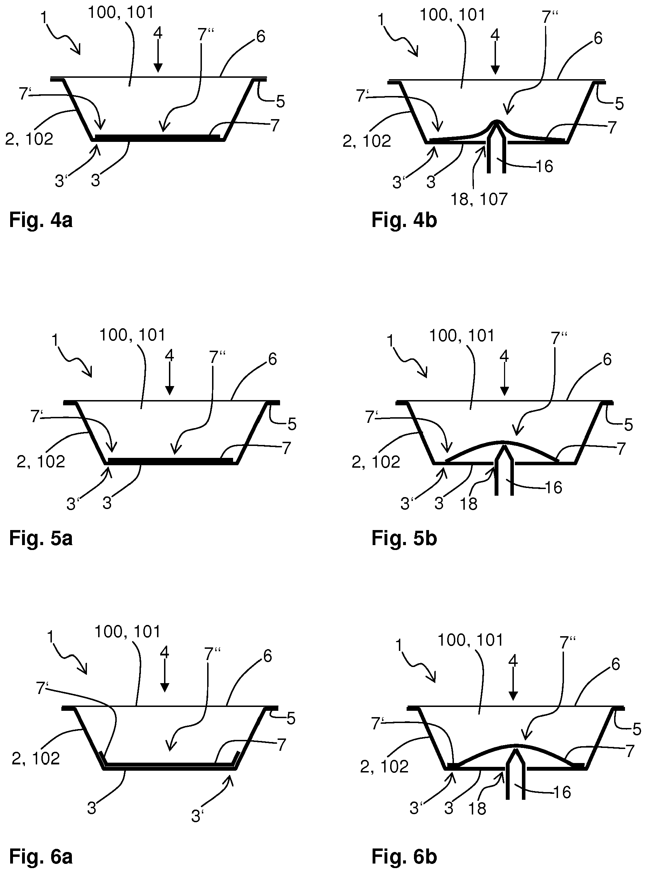

In **Figuren 4a und 4b** sind schematische Schnittbildansichten einer Portionskapsel 1 gemäß einer dritten Ausführungsform der vorliegenden Erfindung dargestellt, die dritte Ausführungsform gleicht im Wesentlichen der in Figuren 1 und 2 illustrierten ersten Ausführungsform, wobei das Filterelement 7 elastisch ausgebildet ist. In Figur 4a ist die Portionskapsel 1 in ihrer Ausgangsposition dargestellt, während sie in Figur 4b von dem Perforierungsmittel 16 perforiert dargestellt ist (die Portionskapsel 1 befindet sich in Figur 4b in einer nicht weiter dargestellten Brühkammer 8). Durch die elastische Ausbildung des Filterelements 7 wird das Filterelement 7 in seinem Zentralbereich 7" bei einem mechanischen Kontakt mit dem Perforierungsmittel 16 in Richtung der Einlassseite 4 gedehnt, ohne von dem Perforierungsmittel 16 perforiert oder zerrissen zu werden. Im Randbereich des Kapselbodens 3' bleibt das Filterelement 7' fest bzw. stoffschlüssig mit dem Kapselboden 3 verbunden, so dass keine Getränkesubstanz 101 vom Hohlraum 100 am Filterelement 7 vorbei in Richtung der durch das Perforierungsmittel 16 erzeugten Ausgangsöffnung 107 gelangt.

In **Figuren 5a und 5b** sind schematische Schnittbildansichten einer Portionskapsel 1 gemäß einer vierten Ausführungsform der vorliegenden Erfindung dargestellt, wobei die vierte Ausführungsform im Wesentlichen identisch zu der in Figuren 4a und 4b illustrierten dritten Ausführungsform ist. Das Filterelement 7 ist dabei jedoch nicht-elastisch ausgebildet und wird von dem Perforationsmittel 16 nahezu vollständig vom Kapselboden 3 angehoben. Da sich die Grundfläche des Filterelements 7 hierbei nicht verändert, rutschen die Randbereiche 7' des Filterelements nach innen, d.h. in Richtung des zentralen Punkts 106 des Kapselbodens 3'.

In **Figuren 6a und 6b** schematische Schnittbildansichten einer Portionskapsel 1 gemäß einer fünften Ausführungsform der vorliegenden Erfindung dargestellt, wobei die fünfte Ausführungsform im Wesentlichen der in Figuren 5a und 5b illustrierten sechsten Ausführungsform gleicht. Das Filterelement 7 ist insbesondere flexibel ausgebildet und weist eine Grundfläche auf, welche größer als die Grundfläche des Kapselbodens 3 ist. Dies führt dazu, dass der Randbereich 7' des Filterelements 7' sich in der in Figur 6a dargestellten Ausgangslage der Portionskapsel 1 an einen unteren Teil des Seitenwandbereichs 102 des Kapselkörpers 2, welcher sich von dem Kragenrand 5 bis zum Kapselboden 3 erstreckt, anschmiegt. Wenn nun der Kapselboden 3 durch das Perforierungsmittel 16 perforiert wird und das Filterelement 7 in seinem Zentralbereich 7" vom Kapselboden 3 durch das Perforierungsmittel 16 abgehoben wird, rückt der Randbereich 7' des Filterelements 7 in Richtung des Kapselbodens 3 nach. Auf diese Weise wird sichergestellt, dass der Randbereich 3' des Kapselbodens 3 stets mit dem Filterelement 7 bedeckt bleibt und somit keine Getränkesubstanz 101 am Filterelement 7 vorbei ungefiltert in Richtung Ablauf 18 gelangt.

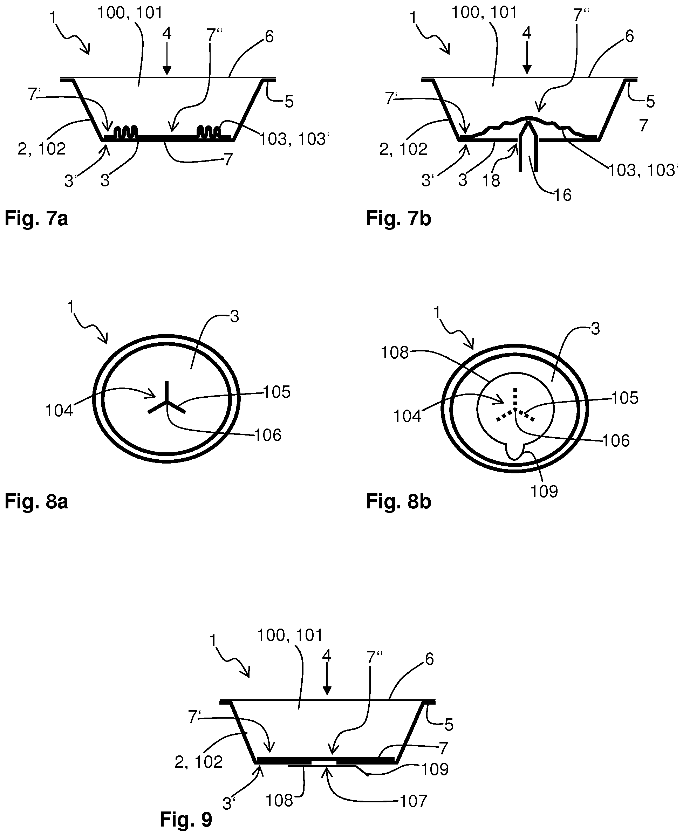

In **Figuren 7a und 7b** sind Schnittbildansichten einer Portionskapsel 1 gemäß einer sechsten Ausführungsform der vorliegenden Erfindung dargestellt. Die sechste Ausführungsform gleicht im Wesentlichen der in Figur 5a und 5b illustrierten vierten Ausführungsform, wobei das Filterelement 7 einen Materialspeicher 103 aufweist. Der Materialspeicher 103 umfasst einen gewellten Bereich 103', d.h. einen Bereich in welchem überschüssiges Material des Filterelements 7 aufgestaut ist. Wenn nun der Zentralbereich 7" durch das Perforierungsmittel 16 vom Kapselboden 3 angehoben wird, wirken Zugkräfte auf den Materialspeicher 103, wodurch sich der gewellte Bereich 103' zumindest teilweise glättet und somit ausreichend Material zur Verfügung steht, dass der Zentralbereich 7" in ausreichender Weise angehoben werden kann und eine Zerreißen oder Perforieren des Filterelements 7 unterbunden wird.

In **Figuren 8a und 8b** ist eine Ansicht eines Kapselbodens 3 einer Portionskapsel 1 gemäß einer siebten Ausführungsform der vorliegenden Erfindung dargestellt, die siebte Ausführungsform gleicht im Wesentlichen der in Figuren 1 und 2 illustrierten ersten Ausführungsform, wobei die Portionskapsel 1 in Figur 8 von "unten" dargestellt ist. In dieser Ansicht ist die optionale Sollbruchstelle 104 zu erkennen, welche drei Schwächungslinien 105 umfasst, die sternförmig und in radialer Richtung um den zentralen Punkt 106 auf dem Kapselboden 3 herum angeordnet sind. Entlang der Schwächungslinien 105 weist der Kapselboden 3 eine reduzierte Materialstärke auf und/oder ist der Kapselboden 3 vorperforiert, um eine Perforation in der Brühkammer 8 zu begünstigen. Damit das Aroma der Getränkesubstanz 101 auch bei einem vorperforierten Kapselboden 3 über längere Lagerzeiten aufrecht erhalten bleibt, ist der Kapselboden 3 zumindest im Bereich der Sollbruchstelle 104 vorzugsweise mit einer perforierbaren oder von Hand abziehbaren Folie 108 versiegelt. Die Folie 108 klebt dazu beispielsweise auf der Außenseite des Kapselbodens 3 und ist mit einer Abziehlasche 109 versehen, welche nicht am Kapselboden 3 klebt und an welcher die Folie 108 von Hand abgezogen werden kann. Eine beispielhafte Ausführungsform mit Schwächungslinien 105 in Form von Perforationen im Kapselboden 3, sowie mit einer Folie 108 ist in Figur 8b illustriert.

In **Figur 9** ist eine Schnittbildansicht einer Portionskapsel 1 gemäß einer achten Ausführungsform der vorliegenden Erfindung dargestellt. Die achte Ausführungsform gleich im Wesentlichen der in Figur 1 dargestellten ersten Ausführungsform, wobei die Portionskapseln 1 der achten Ausführungsform mit einer permanenten Ausgangsöffnung 107 im Kapselboden 3 ausgestattet ist, welche in der Ausgangslage mit der Folie 108 abgedichtet ist. Sollbruchstellen weist die Portionskapsel 1 daher nicht auf. Die Folie 108 weist dabei ebenfalls die Abziehlasche 109 zum Abziehen der Folie 108 von Hand auf. Eine Perforation des Kapselbodens 3 mittels eines äußeren Perforationsmittels 16 ist nicht vorgesehen. Vielmehr wird dem Einlegen der Portionskapsel 1 in die Brühkammer 8 wird die Folie 108 mittels der Abziehlasche 109 einfach vom Kapselboden 3 abgezogen und der Brühvorgang kann anschließend direkt und ohne Perforierung des Kapselbodens 3 gestartet werden.

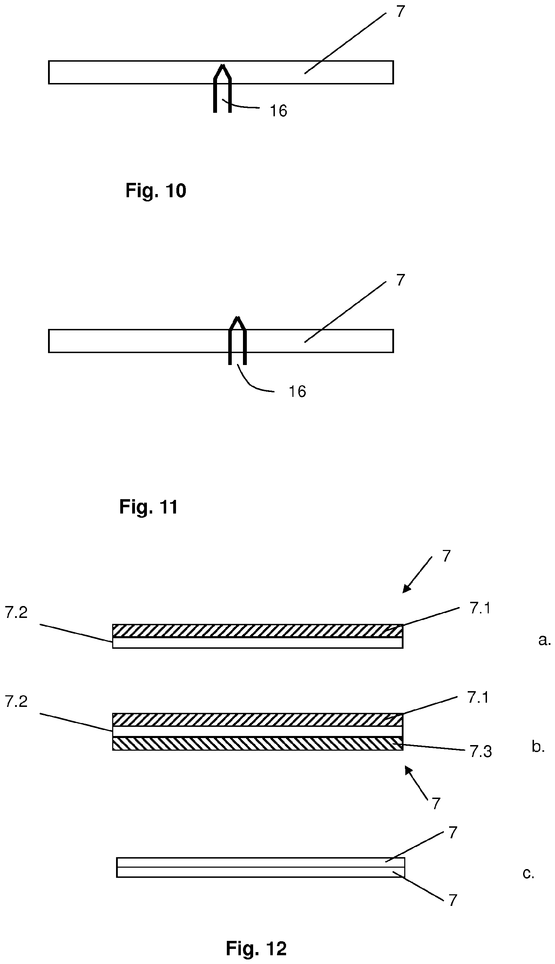

**Figuren 10 und 11** zeigen eine weitere Ausführungsform der vorliegenden Erfindung. In dem vorliegenden Fall ist das Filterelement 7 so ausgeführt, dass das Performationsmittel 16 beim Eindringen in die Kapsel das Filterelement spannt, ansticht (Fig. 10) und/oder durchsticht, d.h. das Filterelement ist beispielsweise mit dem Boden der Kapsel zumindest abschnittsweise stoffschlüssig verbunden, an dem Boden möglichst großflächig anliegend vorgesehen und/oder gespannt.

**Figuren 12** **a - c** zeigen unterschiedliche Ausführungsformen eines Filterelementes 7 mit einer Filzstruktur 7.1, insbesondere Nadelfilzstruktur. Dieses Filterelement 7 weist vorzugsweise eine Trägerstruktur 7.2, beispielsweise eine Gewebestruktur auf. An dieser und/oder in diese Gewebestruktur 7.2 wird auf der gesamten, dem Kaffeepulver oder Tee zugewandten Oberfläche eine Filzstruktur 7.1, angeordnet und beispielsweise durch Nadelfilzen mit dieser verbunden, was in Figur 12a dargestellt ist.
Die Ausführungsform gemäß Figur 12b weist zwei Filzstrukturen 7.1 und 7.3 auf, die jeweils an und/oder in der Trägerstruktur angeordnet sind. Beide Strukturen erstrecken sich vorzugsweise über den gesamten Querschnitt, d.h hier die gesamte kreisförmige Oberfläche, des Filterelementes. Die Filzstrukturen 7.1 und 7.3 können gleich oder unterschiedlich dick sein. Vorzugsweise ist die Filzstruktur 7.1 dünner ausgeführt als die Schicht 7.3 oder umgekehrt. Die Trägerschicht ist dann bezüglich der Mitte, bezogen auf die Dicke, des Filterelementes versetzt vorgesehen sein. Die Strukturen 7.1 und 7.3 können aus unterschiedlichen oder demselben Materiali(en) hergestellt sein. Diese betreffen nicht nur die Substanz aus der sie hergestellt sind, sondern auch die Fadendurchmesser und/oder die Fadenlänge aus denen die Filzstrukturen gefertigt werden. Zwischen den beiden Strukturen 7.1 und 7.3 ist eine Trägerstruktur 7.2 vorgesehen, in der sich kein oder nur wenig Filzstruktur befindet und die vorzugsweise Querströmungen zulässt.
Figur 12c zeigt noch eine weitere Ausführungsform eines Filterelementes mit Filzstruktur. In dem vorliegenden Fall sind zwei Filterelemente 7 mit einer Filzstruktur, wie sie beispielsweise gemäß den Figuren 12a und b beschrieben wurden, übereinander angeordnet. Die Filterelemente 7 können lediglich aufeinander liegen oder miteinander verbunden sein. Die Filterelemente 7 können aber auch nur Filz ohne Trägerstruktur aufweisen.

Alle Filterelemente mit einer Filzstruktur haben den Vorteil, dass sie einen geringen Druckverlust aufweisen, bzw. dass der Druckabbau entlang des Fliterelementes mit einem geringen Gradienten erfolgt. Dadurch kann beispielsweise Kaffee ohne Crema, d.h. Schaum, oder Tee ohne Schaum hergestellt werden. Die Filterelemente mit einer Filzstruktur werden vorzugsweise lediglich in die Kapsel eingelegt. Vorzugsweise weist das Filterelement mit der Filzstruktur einen größeren Durchmesser auf als der Boden der Kapsel, so dass es sich im Randbereich gegen die Wandung der Kapsel drückt.

Vorzugsweise ist das Filterelement mit Filzstruktur, insbesondere vollständig, aus PET gefertigt.

### Bezugszeichenliste

- 1: Portionskapsel
- 2: Kapselkörper
- 3: Kapselboden
- 3a: Kapselboden-Innenseite
- 3': Randbereich des Kapselbodens
- 4: Einfüllseite
- 5: Kragenrand
- 6: Deckelfolie
- 7: Filterelement
- 7': Randbereich des Filterelements
- 7": Zentralbereich des Filterelements
- 7.1: Filzstruktur, Nadelfilzstruktur
- 7.2: Trägerstruktur
- 7.3: Filzstruktur, Nadelfilzstruktur
- 8: Brühkammer
- 9: Erstes Brühkammerelement
- 10: Zweites Brühkammerelement
- 11: Dichtung
- 12: Schließkolben
- 13a: Einstechelement
- 13b: Einstechelement
- 14: Zubereitungsflüssigkeitszufuhr
- 15: Brühglocke
- 16: Öffnungsdorn
- 17: Auslaufrillen
- 18: Ablauf
- 19: Einstechspitze
- 20: Einbuchtung
- 21: Ausbuchtung
- 22: Zubereitungsflüssigkeitsfluss
- 23: Brühglockenboden
- 100: Hohlraum
- 101: Getränkesubstrat
- 102: Seitenwandbereich
- 103: Materialspeicher
- 103': Gewellter oder gefalteter Bereich
- 104: Sollbruchstelle
- 105: Schwächungslinien
- 106: Zentraler Punkt
- 107: Ausgangsöffnung
- 108: Folie
- 109: Abziehlasche

## Patentansprüche

1. Portionskapsel (1) zur Herstellung eines Getränks aufweisend einen Kapselkörper (2) mit einem Kapselboden (3) und einer Einfüllseite (4), wobei zwischen dem Kapselboden (3) und der Einfüllseite (4) ein Hohlraum (100) zur Aufnahme eines pulverförmigen oder flüssigen Getränkesubstrats (101) ausgebildet ist und wobei zwischen dem Getränkesubstrat (101) und dem Kapselboden (3) ein Filterelement (7) angeordnet ist, wobei das Filterelement (7) ein Vlies ist, welches im Bereich des Kapselbodens (3) angeordnet ist, wobei das Filterelement locker in die Portionskapsel eingelegt ist und eine Fixierung des Filterelements durch das Getränkesubstrat erfolgt, **dadurch gekennzeichnet, dass** sich das Vlies unmittelbar am Kapselboden abstützt und im Kapselboden eine Sollbruchstelle (104) vorgesehen ist.

2. Portionskapsel (1) nach Anspruch 1, **dadurch gekennzeichnet, dass** das Filterelement (7) den Kapselboden (3) vollständig oder nur teilweise überdeckt.

3. Portionskapsel (1) nach einem der vorhergehenden Ansprüche, **dadurch gekennzeichnet, dass** die Sollbruchstelle (104) dazu vorgesehen ist, infolge eines mechanischen Kontakts mit einem äußeren Perforationsmittel (16) aufzureißen.

4. Portionskapsel (1) nach Anspruch 3, **dadurch gekennzeichnet, dass** die Sollbruchstelle (104) eine Mehrzahl von sternförmig um einen zentralen Punkt (106) des Kapselbodens (3) angeordnete Schwächungslinien (105) umfasst, wobei der Kapselboden (3) entlang der Schwächungslinien (105) eine reduzierte Materialstärke aufweist und/oder perforiert ist.

5. Portionskapsel (1) nach einem der voranstehenden Ansprüche, **dadurch gekennzeichnet, dass** der Kapselkörper spritzgegossen ist.

6. Portionskapsel nach einem der voranstehenden Ansprüche, **dadurch gekennzeichnet, dass** der Kapselkörper einen Kragenrand aufweist, auf den eine Deckelfolie gesiegelt ist.

7. Verwendung einer Portionskapsel (1) nach einem der voranstehenden Ansprüche zur Herstellung eines Getränks, vorzugsweise zur Herstellung eines Kaffee-, Kakao-, Tee- und/oder Milchgetränks.

## Claims

1. Portion capsule (1) for producing a beverage, having a capsule body (2) with a capsule base (3) and a filling side (4), wherein a cavity (100) for accommodating a pulverulent or liquid beverage base (101) is formed between the capsule base (3) and the filling side (4), and wherein a filter element (7) is arranged between the beverage base (101) and the capsule base (3), wherein the filter element (7) is a non-woven which is arranged in the region of the capsule base (3), wherein the filter element is placed loosely into the portion capsule and the filter element is fixed by the beverage base, **characterized in that** the non-woven is supported directly on the capsule base and a predetermined breaking point (104) is provided in the capsule base.

2. Portion capsule (1) according to Claim 1, **characterized in that** the filter element (7) completely or only partially covers the capsule base (3).

3. Portion capsule (1) according to either of the preceding claims, **characterized in that** the predetermined breaking point (104) is intended to tear open as a result of mechanical contact with an outer perforation means (16).

4. Portion capsule (1) according to Claim 3, **characterized in that** the predetermined breaking point (104) comprises a plurality of lines (105) of weakness which are arranged in the manner of a star around a central point (106) of the capsule base (3), wherein the capsule base (3) has a reduced material thickness and/or is perforated along the lines (105) of weakness.

5. Portion capsule (1) according to one of the preceding claims, **characterized in that** the capsule body is injection-moulded.

6. Portion capsule according to one of the preceding claims, **characterized in that** the capsule body has a collar edge onto which a covering foil is sealed.

7. Use of a portion capsule (1) according to one of the preceding claims for producing a beverage, preferably for producing a coffee, cocoa, tea and/or milk beverage.

## Revendications

1. Capsule dosette (1) pour la préparation d'une boisson, présentant un corps de capsule (2) avec un fond de capsule (3) et un côté de remplissage (4), une cavité (100) destinée à recevoir un substrat de boisson pulvérulent ou liquide (101) étant réalisée entre le fond de capsule (3) et le côté de remplissage (4) et un élément de filtre (7) étant disposé entre le substrat de boisson (101) et le fond de capsule (3), l'élément de filtre (7) étant un non-tissé qui est disposé dans la région du fond de capsule (3), l'élément de filtre étant introduit lâchement dans la capsule dosette et une fixation de l'élément de filtre se produisant par le substrat de boisson, **caractérisée en ce que** le non-tissé s'appuie directement contre le fond de capsule et une zone destinée à la rupture (104) est prévue dans le fond de capsule.

2. Capsule dosette (1) selon la revendication 1, **caractérisée en ce que** l'élément de filtre (7) recouvre complètement ou seulement partiellement le fond de capsule (3).

3. Capsule dosette (1) selon l'une quelconque des revendications précédentes, **caractérisée en ce que** la zone destinée à la rupture (104) est prévue de manière à se déchirer suite à un contact mécanique avec un moyen de perforation extérieur (16).

4. Capsule dosette (1) selon la revendication 3, **caractérisée en ce que** la zone destinée à la rupture (104) comprend une pluralité de lignes d'affaiblissement (105) disposées en forme d'étoile autour d'un point central (106) du fond de capsule (3), le fond de capsule (3) présentant le long des lignes d'affaiblissement (105) une épaisseur de matériau réduite et/ou étant perforé.

5. Capsule dosette (1) selon l'une quelconque des revendications précédentes, **caractérisée en ce que** le corps de capsule est moulé par injection.

6. Capsule dosette selon l'une quelconque des revendications précédentes, **caractérisée en ce que** le corps de capsule présente un bord en collerette sur lequel est scellé un film de recouvrement.

7. Utilisation d'une capsule dosette (1) selon l'une quelconque des revendications précédentes pour la préparation d'une boisson, de préférence pour la préparation d'une boisson à base de café, de cacao, de thé et/ou de lait.
